# EUROPEAN PATENT SPECIFICATION

(11) **EP 3 581 462 B1**
(45) Date of publication and mention of the grant of the patent: **07.06.2023**
(21) Application number: 19179718.2
(22) Date of filing: 12.06.2019
(51) Int. Cl.: B62B 3/18

(54) **ROLL CONTAINER**
ROLLBEHÄLTER
RÉCIPIENT À ROULEAU

(30) Priority: 13.06.2018 FI 20185539
(43) Date of publication of application: 18.12.2019
(73) Proprietor: K. Hartwall Oy AB, 01150 Söderkulla (FI)
(72) Inventor: JÄRVI, Mikko, 01150 Söderkulla (FI)
(74) Representative: Laine IP Oy

(56) References cited:
- EP-A1- 3 081 453
- DE-U1-202014 105 450
- GB-A- 2 484 548
- US-A- 3 893 686
- US-A1- 2016 082 996

## Description

### FIELD

The present invention relates to logistics equipment. In particular, the invention relates to roll containers of a nesting type. More specifically, the invention relates to roll containers according to the preamble portion of claim 1 and to the method according to the preamble portion of claim 19.

### BACKGROUND

Roll containers are a popular means of moving and temporary storage of goods. While there are a variety of different types of roll containers, a nesting type has achieved great popularity. The European standard for roll containers EN12674-1:1999 discloses the five main types of nesting roll containers:
A. the "A-frame chassis" type,
B. the "Z-frame chassis" type,
C. the "U-frame chassis" type,
D. the "V-frame" type, and
E. the "L-frame" type.

The "A-frame chassis" type has gained great popularity. As the name suggests, the type employs an A-shaped chassis in plan view. The "A-frame chassis" type has a back frame section with a rear wall extending laterally and integral side parts which extend longitudinally, i.e. orthogonally to the rear wall. The rear castors are attached to the longitudinal side parts of the rear section and the front castors are attached to the chassis. "A-frame chassis" roll containers also comprise a liftable base, which is hinged to the back frame section of the container. In a horizontal position the base is able to receive and support the contents of the container. In a vertical position the base is folded parallel to the back frame section for accommodating efficient nesting. Side frame sections may be hinged to the longitudinal side parts. When nested, the side frame sections are folded parallel to the back frame section, wherein they are positioned above the chassis. The projecting A-frame chassis can then be rolled under a similar nesting unit. One example of an A-frame chassis configuration is disclosed in US 2016/0082996 A1. US 3893686 A, on the other hand, discloses a variant of an A-frame chassis with a quadrangular chassis which may be folded into a storage configuration, wherein roll container is tipped to its side and stored side by side with wheels off the ground. The quadrangular chassis therefore does not provide for a queued storage similar to an A-frame chassis.

Contrary to the "A-frame chassis" roll container, the "V-frame" roll container does not contain a chassis or longitudinal side parts of the rear sections and the side frame sections are hinged to the very rear of the back frame section (cf. to the longitudinal side part of the rear sections of "A-frame chassis" roll containers) and arranged to fold out so as to form a V-shape with a flat rear part formed by the back frame section. The folding principles of these types are therefore the exact opposites. As there is no chassis, the castors of "V-frame" roll containers are connected to the side and back frame sections.

While the "A-frame chassis", "V-frame" and other roll container types are very efficient in view of return logistics, there still remains a long standing need to improve the handling of empty nesting roll containers. One such improvement is presented in EP 3081453 A, where a nesting roll container is improved for machine assisted handling.

It is therefore an aim of the present invention to provide an improved roll container of a nesting type, which would not only have the nesting ability of standard containers but also be stable and ergonomic in use.

### SUMMARY

A novel roll container a nesting type is proposed with a rear section and two side walls which laterally oppose one another and which are pivotably attached to the rear section between a deployed state and a nesting state. In the deployed state the side walls extend from the rear section parallel to each other. In the nesting state the side walls extend from the rear section away from each other. The roll container also has a chassis, which is attached to the rear section, and a base which is pivotably attached to the rear section such to be pivotable between a deployed state and a nesting state. In the deployed state the base is supported by the chassis and in the nesting state the base is lifted from the chassis. The roll container further has a first locking mechanism provided to each side wall and for releasably securing one of the two side walls to the base or chassis. The roll container further includes an additional secondary locking mechanism for locking the base to the deployed state. The secondary locking mechanism has a first counterpart on each side wall and a second counterpart on the base. The first counterpart and the second counterpart engage each other in the deployed state of the side walls and the base for preventing the base from lifting off the chassis. On the other hand, the first counterpart and the second counterpart disengage from each other in the nesting state of the side walls and the base for allowing the base to lift off the chassis.

A novel method is also proposed, wherein a plurality of such roll containers is transported in a nesting configuration by lifting the plurality from below and transported with lifting forks of a forklift.

The invention is defined by the features of the independent claims. Some specific embodiments are defined in the dependent claims.

Considerable benefits may be gained by virtue of the present proposition. The proposed combination provides for a roll container which can be easily constructed to have a low and central center of gravity thus improving stability especially when transported in queue formation. Increased stability enables use of four swivel castors, which may be desired when the roll container is constructed to have a wide chassis. A wide chassis, on the other hand, enables manipulation by transporting the roll container by placing lifting forks of a forklift head on, i.e. longitudinally, under the chassis. When lifting several nesting roll containers at once with a forklift, the front of each roll container will be supported by the chassis and the rear of each roll container will be supported by the rear section extending across the roll container. Practical experimentation has revealed that the tip over point may be increased from a conventional 10 degree inclination to 25 degrees.

According to one embodiment, the locking mechanism is constructed as a foot-operated mechanism which may be used without crouching down or inside the roll container thus improving ergonomics.

According to one embodiment, the base is secured to the side walls vertically by employing a horizontally connection between the base and side walls. This secondary locking mechanism provides for extra support when transporting several roll containers in queue formation. Practical experimentation has revealed that in a queue of more than two roll containers, the connection between the first two roll container provided by the secondary locking mechanism is enough to carry the third roll container even when the third roll container is directly not supported by the forklift.

According to one embodiment, the base is horizontally hinged to the rear section and biased towards the nesting state. With the base biased up, there is less respective movement of the base and the surrounding elements of the roll container, which significantly reduces noise.

### BRIEF DESCRIPTION OF THE DRAWINGS

Certain exemplary embodiments are here after discussed in greater detail with reference to the accompanying drawings in which:
- FIGURE 1: illustrates a perspective view of a roll container in accordance with at least some embodiments of the present invention in operational state;
- FIGURE 2a: illustrates a detail view of area A of FIGURE 1 showing the locking mechanism in deployed state;
- FIGURE 2b: illustrates a detail view of the locking mechanism of FIGURE 2a in an intermediate state;
- FIGURE 3a: illustrates a detail view of area B of FIGURE 1 showing the locking mechanism in deployed state;
- FIGURE 3b: illustrates a detail view of the locking mechanism of FIGURE 3a in an intermediate state;
- FIGURE 4: illustrates a perspective view of the roll container of FIGURE 1 in nesting state;
- FIGURE 5: illustrates a detail view of area D of FIGURE 4;
- FIGURE 6a: illustrates a detail view of area C of FIGURE 1;
- FIGURE 6b: illustrates a detail view of area E of FIGURE 4;
- FIGURE 7: illustrates a perspective view of three roll containers of FIGURE 4 in queue formation;
- FIGURE 8: illustrates a perspective view of a roll container in accordance with a modified embodiment of the present invention in operational state;
- FIGURE 9a: illustrates a detail view of area F of FIGURE 8, and
- FIGURE 9b: illustrates a detail view of the roll container of FIGURE 8 in an intermediate state.

### EMBODIMENTS

In this context the term *longitudinal* refers to the main travelling direction of the roll container, which is the same as the nesting direction. The longitudinal direction is also the direction steered to by the fixed castors, if there are any. Accordingly, the term *transversal* refers to the horizontal direction orthogonal to the longitudinal direction. The terms *rear* and *front* refer to opposing ends of the roll container in the longitudinal dimension.

The embodiments herein described make use of a modified A-frame chassis type roll container with outwardly opening side walls and a locking mechanism, preferably foot-operated, for securing the side walls to the parallel deployed orientation.

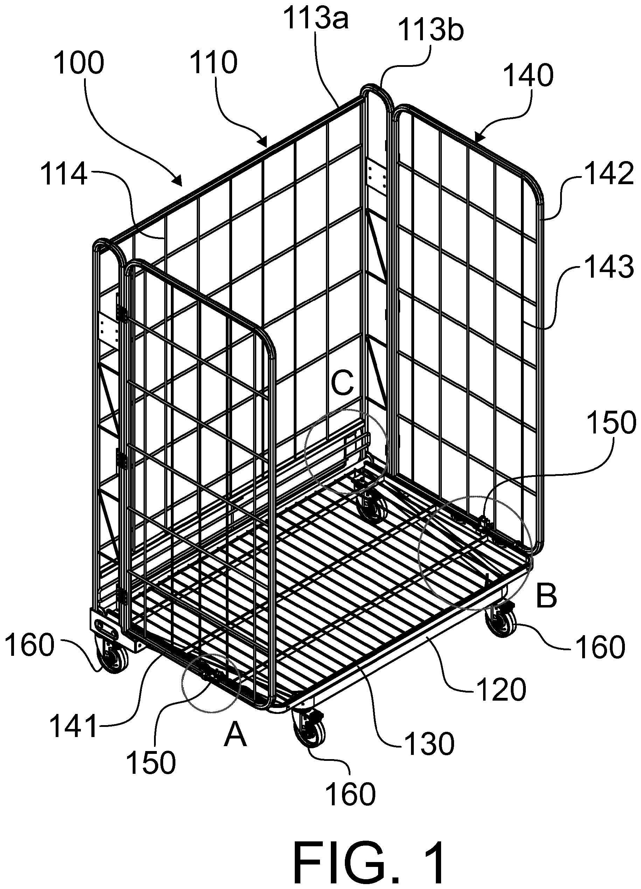

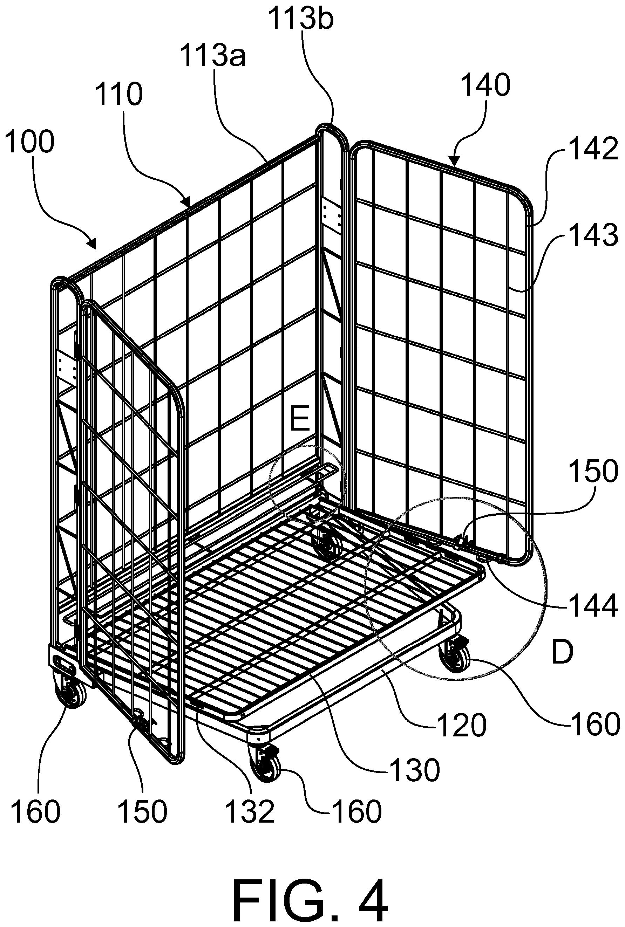

As can be seen from the FIGURES, the roll container 100 according to one embodiment features a typical A-frame construction in that an A-frame chassis 120 is attached to a fixed rear section 110 and rides on castors 160. The rear section 110 is connected through a bolt and nut connection, for example, to the rear part of the chassis 120. The front castors 160 are attached to the transversal front part of the chassis 120 and the rear castors 160 are attached to the respective longitudinal rear parts of the chassis 120 underneath the rear section 110. The castors may be swivel or fixed or both with fixed castors at the back and swivel castors at the front or vice versa. The rear section 110 has a transversally extending back part 113a delimited by a frame 111 and covered by a mesh 114, for example. The rear section 110 also includes longitudinal side parts 113b of the rear section 110 - i.e. longitudinally extending fixed side walls - that provide hinge points for the side walls 140. Two side walls 140 are rear hinged to the respective longitudinal side parts 113b of the rear section 110 about vertical hinge axes. In the deployed state shown in FIGURE 1 the side walls 140 extend parallel in the longitudinal dimension of the roll container. In the nesting state shown in FIGURE 4, the two side walls 140 extend 110 away from each other. This means that, in respect to the rear section 110, the distal ends of the side walls 140 are further from one another than the hinged proximal ends of the side walls 140. In other words, the front ends of the side walls 140 are transversally distanced from one another in the nesting state of the roll container 100. To yet elaborate, the side walls 140 are non-parallel in respect to each other in the nesting state. This "outward" opening of the side walls 140 significantly is different from typical A-frame type roll containers that feature the side walls that fold on top of each other parallel to the back part 113a of the rear section 110 and above the chassis. The side walls 140 proposed of the proposed roll container, on the other hand, extend lower in the vertical dimension to flank the base 130. Also, in contrast to many known roll containers, the side walls 140 are not intended to be removed from the rear section 110 to prepare for nesting but rather to stay on the roll container 100 during transport and storage, i.e. in the deployed and nesting state.

A base 130 has been rear hinged to the rear section 110. The base 130 acts as a supporting surface for the contents of the roll container 100. The base 130 can be constructed as a unibody of any sufficiently rigid material, such as plastic. Alternatively, as shown in the FIGURES, the base 130 may be constructed of a frame 131 carrying a cover, such as a mesh. FIGURE 1 shows the base 130 in a deployed state, in which the base 130 is supported by the chassis 120. In other words, the base 130 extends horizontally in an operational configuration. FIGURE 4 shows the base 130 in a nesting state, in which the base 130 is lifted from the chassis 120. In other words and in respect to the rear section 110, the distal end of the base 130 is elevated in respect to the hinged proximal end in a non-operational storage configuration. The base 130 is preferably biased such to be urged towards the nesting state. The hinge is therefore preferably constructed to include a biasing element, such as a spring (not shown in the FIGURES), that elevates the front end of the base 130. Instead of or in addition to the suspended base, the leading edge of the base may be wedged (not shown in the FIGURES). The wedged front edge of the base creates a lifting force when the leading edge of the base collides with the rear edge of a base of another roll container when the roll containers are pushed into contact for nesting.

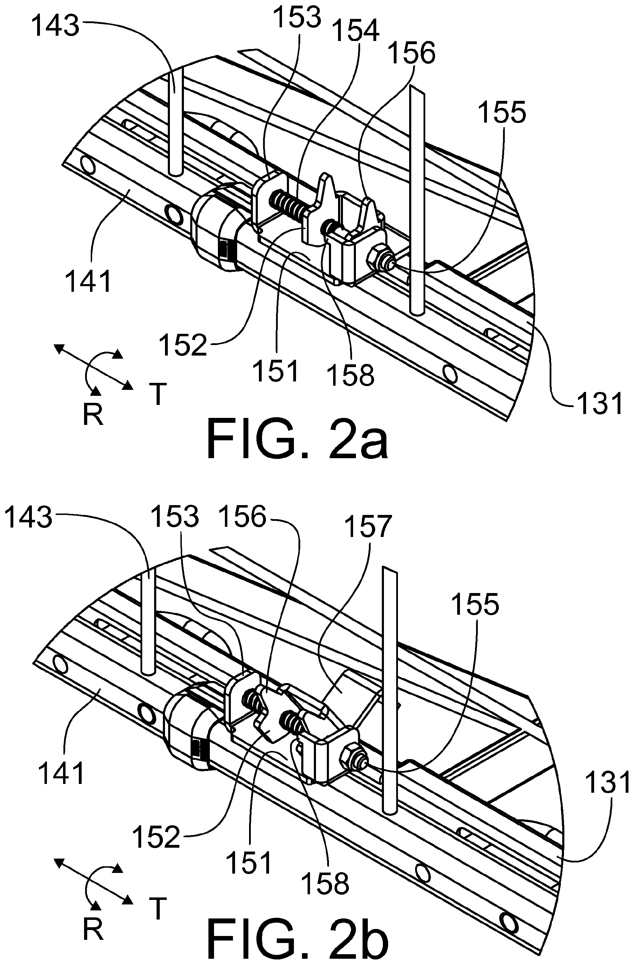

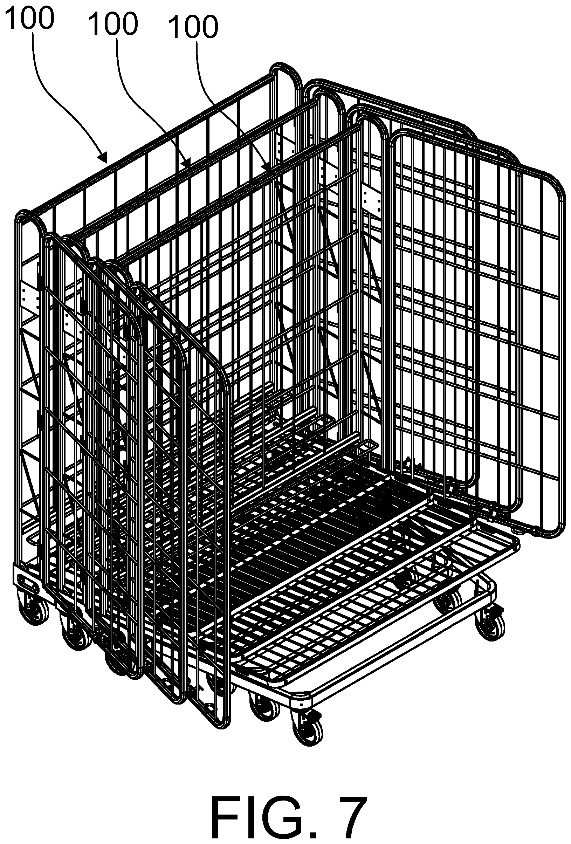

The roll container 100 includes a first locking mechanism 150 that is designed to releasably secure the side wall 140 to the base 130 or chassis 120. The illustrated first locking mechanism 150 is designed to secure one side wall 140 to the base 130, whereby the roll container 100 features two locking mechanisms 150, one at each side wall 140. To enhance the effect, both side walls 140 could also have several locking mechanisms. The first locking mechanism 150 is constructed as foot-operated so as to be operated from the side of the roll container 100 for improved ergonomics thus avoiding reaching down or inside the roll container. FIGURE 2a shows area A of FIGURE 1 with a detailed illustration of the first locking mechanism 150 according to a first main embodiment shown in FIGURES 1 to 7 in an activated state. The first locking mechanism 150 has a bracket 151 attached to the side wall 140. Particularly, the bracket 151 is attached to the frame 141, preferably on the upper surface of the bottom horizontal frame section of the side wall 140. Such located, the first locking mechanism 150 may installed within the side wall 140 without protruding out from or into the cargo space of the roll container 100.

The bracket 151 has two axle supports 153 at both longitudinal ends of the bracket 151 that hold an axle 155 extending in the longitudinal dimension of the side wall 140. In the shown example the axle 155 is secured to the axle supports 153 of the bracket 151 with a nut. The first locking mechanism 150 also includes a latch 152 which is journaled to the bracket 151 through the axle 155. Accordingly, there is a fit between the latch 152 and the axle 155 that allows for rotation about the axle 155. Accordingly, the axle 155 establishes a rotational dimension R which is rotation about the longitudinal dimension of the roll container 100 when the side walls 140 are in the deployed state. The fit between the latch 152 and the axle 155 also allows for translation along the axle 155 in a translational dimension T, i.e. in the longitudinal dimension of the roll container 100. The latch 152 is preferably biased towards the activated state shown in FIGURE 2a. A coil spring 154 could for example be used as such a biasing element. The coil spring 154 is preferably rotationally fixed to the latch 152 so as to urge the latch 152 towards the activated state both in the translational dimension T and in the rotational dimension R.

Alternatively, the latch could be fixed to the axle which, in turn, could be journaled to the bracket. Such an embodiment could employ an integrated biasing element.

The bracket 152 serves two purposes. On the one hand the purpose of the bracket 152 is to engage the base 130 or chassis 120 for securing the side wall 140 to the base 130 or chassis 120, respectively, to prevent the side wall 140 from opening from the deployed state to the nesting state. In the illustrated embodiment, the bracket 152 is designed to engage the base 130. To serve the first purpose the bracket 152 has a claw 157 that extends in respect to the axle 155 in a radial manner. The claw 157 has an angled terminal end in respect to the radial projection. The claw 157 is particularly shaped to engage a recess 133 in the frame 131 of the base 130. The frame 131 is recessed such that the engaged claw 157 would be flush with the frame 131.

According to an alternative embodiment (not shown in the FIGURES), the bracket extends to engage the chassis of the roll container. To facilitate such engagement, the bracket may be positioned and dimensioned such that make contact with a cooperating part of the chassis. Engagement with the chassis could be established from underneath the side wall as opposed to from above as shown in FIGURES 1 to 7.

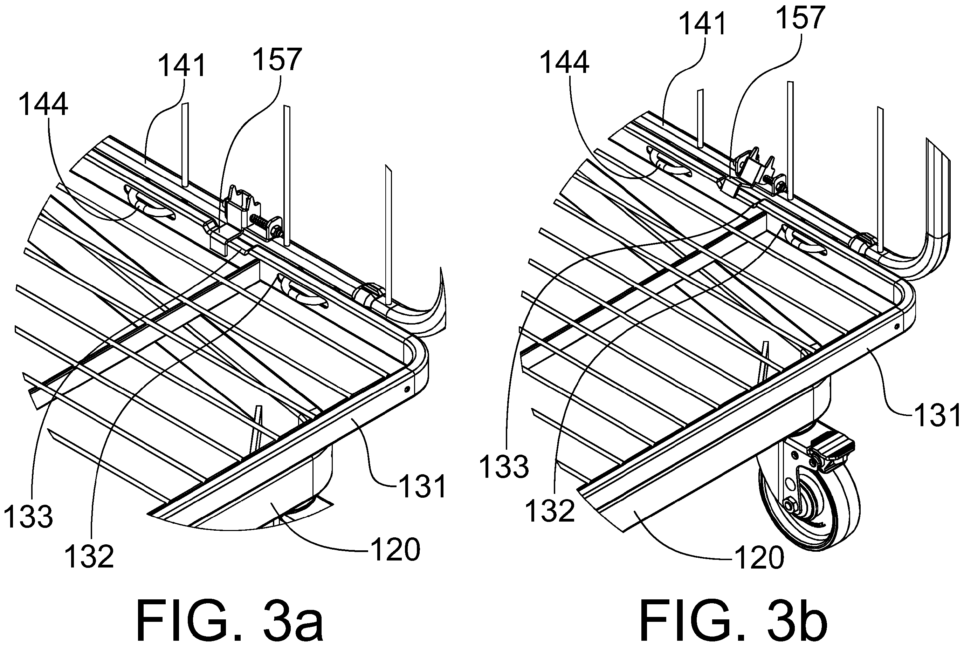

On the other hand, the second purpose of the bracket 152 is to facilitate foot-operation of the first locking mechanism 150. The bracket 152 includes a grip 156 which in the illustrated embodiment extends in an angle, particularly right angle, in respect to the claw 157. The axle support 153 includes a retainer 158 which provides for an axial retained position for the bracket 152. In practice, the retainer 158 may take the form of a longitudinal recess in the axle support 153 into which the grip 156 may be inserted. To release the side wall 140 from the deployed state depicted in FIGURES 2a and 3a, grip 156 is contacted with a foot of the operator, dislocated from the frontal position through translation along the axle 155 in the translational dimension T and then rotated about the axle 155 in the rotational dimension R to the intermediate orientation shown in FIGURES 2b and 3b. The rotation movement is continued with the latch 152 retracted from the frontal position until the grip 156 is below the retainer 158. At that point the grip 156 is pushed by the spring 154 longitudinally towards the frontal position. Finally, the latch 152 assumes a released state, in which the claw 157 is released from the base 130 and the grip 156 is held under the retainer 158 in the released state. To assume the activated state, the grip 156 of the latch 152 may be moved in the translational dimension T by kicking, for example, such to release the grip 156 under the retainer 158. Then, propelled by the biasing element 154, the latch 152 may rotate about the axle 155 in the rotational dimension R and to return in the translational dimension T to the frontal position, wherein the claw 157 reengages the base 130.

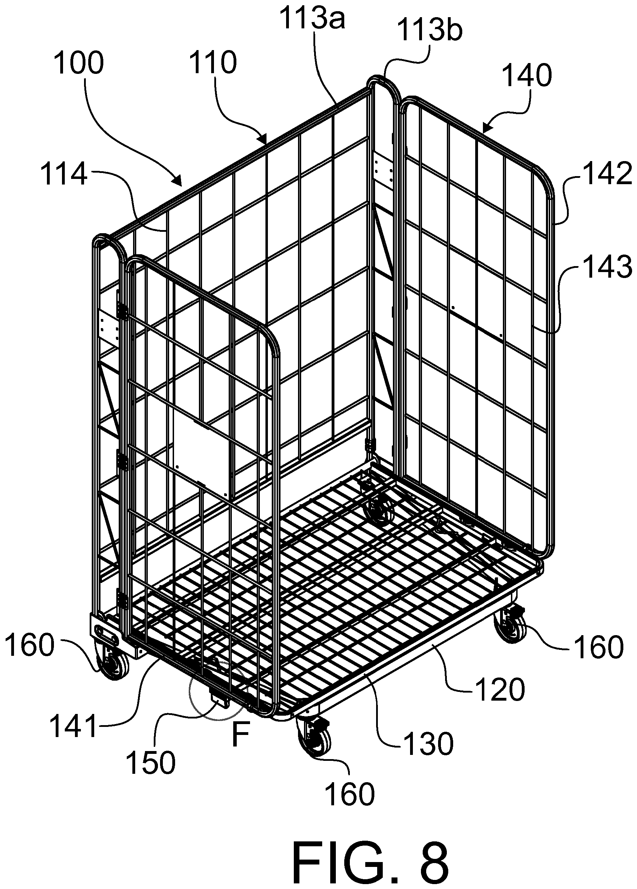

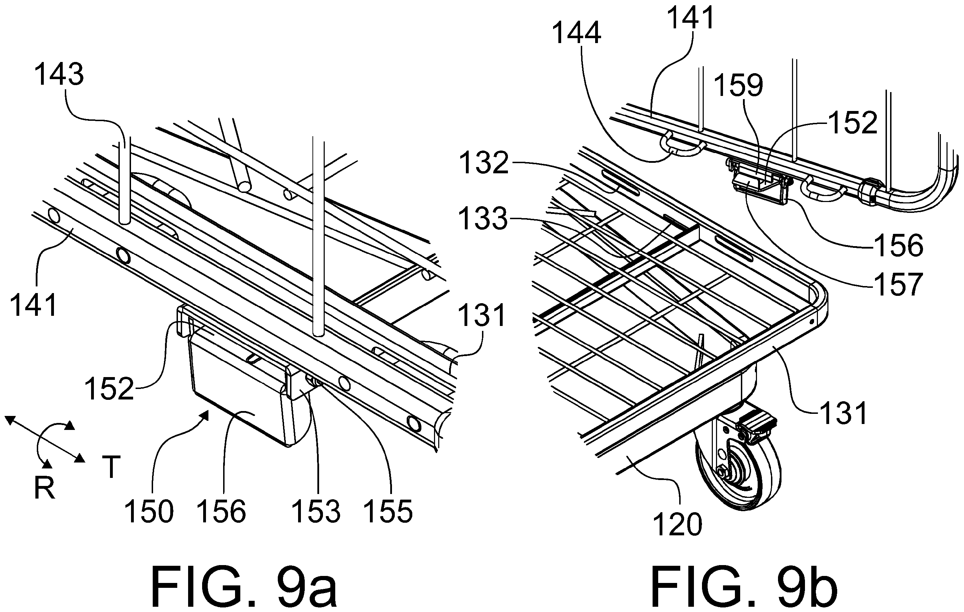

Turning now to the modified embodiment of FIGURES 8, 9a, and 9b which show an alternative to the "top-mounted" first locking mechanism 150. Similarly to the first main embodiment shown in FIGURES 1 to 7, the second main embodiment shown in FIGURES 8, 9a, and 9b is mounted to the side wall 140. Both side walls 140 comprise such a first locking mechanism 150. Also similarly, the first locking mechanism 150 is configured as foot-operated and to engage the base 130. Contrary to the embodiment of FIGURES 1 to 7, the hatch at the rear section 110 has been omitted.

FIGURE 9a shows the first locking mechanism 150 in the activated state. A latch 152 is movably mounted to the frame 141 of the side wall 140 with a bracket 153 through an axle 155. The latch 152 is rotatably fitted to the axle 155 so as to be rotated in the rotational dimension R. In the embodiments shown in FIGURES 8, 9a, and 9b the latch is not configured to be translated along the axle 155 in the translational dimension T although such an embodiment is foreseeable. Extending from the external end of the latch 152 is a grip 156 that is preferably shaped to be engaged with a foot. In the shown example the grip 156 is constructed as a prominent tab which can be kicked from the activated state shown in FIGURE 9a to the released state. FIGURE 9b shows the first locking mechanism 150 in the activated state, in which the latch 152 extends horizontally, but with the side wall 140 in a nesting state.

FIGURE 9b reveals the structure of the first locking mechanism 150 of the second main embodiment in greater depth. Extending from the internal end of the latch 152 is a claw 157 which is configured to engage the base 130. Contrary to the embodiment of FIGURES 1 to 7, the first locking mechanism 150 of FIGURES 8, 9a, and 9b is designed to engage the base 130 from below. For this purpose, the frame 131 of the base 130 has a recess 133 at the bottom edge. The first locking mechanism 150 features a guide 159 which is intended to engage the frame 131 of the base 130 in the activated state of the first locking mechanism 150. The guide 159 is designed to ascertain a relatively tight contact between the first locking mechanism 150 and the base 130 to enhance engagement. To further enhance engagement, the latch 152 is biased towards the activated state. For this purpose, the first locking mechanism 150 may include a biasing element, such as a spring (not shown in FIGURE 9b) wound around the axle 155 similarly to as shown in FIGURES 2a and 2b. The guide 159 may also act as a mounting point for the biasing element.

To release the locking mechanism from the activated state (FIGURE 9a), the operator places his foot underneath the roll container 100 and urges the grip 156 outward thus rotating the latch 152 about the axle 155, i.e. in the rotational dimension R. With the latch 152 rotated, the claw 157 is disengaged from the base 130, whereby the side wall 140 may be opened. Activation is equally simple. The claw 157 is preferably slanted towards the side wall 140. As the side wall 140 is turned towards the deployed state the slanted claw 157 makes contact with the frame 131 of the base 130. The tilted angle of the claw 157 provides for a slope inducing a vertical force component which rotates the latch 152 about the axle 155 enough to allow for the claw 157 to continue to travel on the inside frame 131. With the claw 157 past the frame 131, the vertical component disappears, whereby the biasing element rotates the latch 152 back towards the activated state.

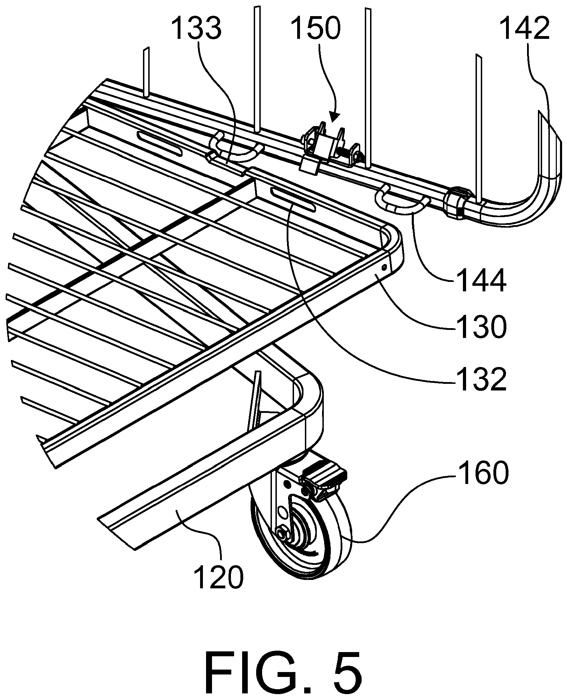

The first locking mechanism 150, regardless of variant, is thus configured to prevent the side wall 140 from opening. The roll container 100 also includes a secondary locking mechanism for locking the base 130 to the deployed state. The secondary locking mechanism is made up by cooperating counterparts provided to the side wall 140 and base 130. The counterparts may take the simple form of a horizontally engaging connection that prevents vertical movement of the base 130. The counterparts engage each other in the deployed state of the side walls 140 and the base 130 for preventing the base 130 from lifting off the chassis 120. On the other hand, the counterparts disengage from each other in the nesting state of the side walls 140 and the base 130 for allowing the base 130 to lift off the chassis 120. According to the illustrated embodiment (see FIGURES 3a, 3b, and 5), the side wall 140 features the first counterpart which takes the form of a protrusion 144. The protrusion 144 may be a bent steel wire extending from the frame or practically any form of a horizontal projection from the side wall 140. The base 130 features the second counterpart which takes the form of a cooperating receptive opening 132 shaped and dimensioned to easily receive and release the protrusion 144 upon moving the side wall 140 between the deployed and nesting state (FIGURE 1 and 4, respectively). Naturally, the secondary locking mechanism could be reversed by providing the side wall with an opening for receiving a respective protrusion on the base. Also, removable locking means, such as cotter pins, clamps, etc., are also foreseen as not preferred alternatives that fail to engage and disengage in reaction to the movement of the side wall.

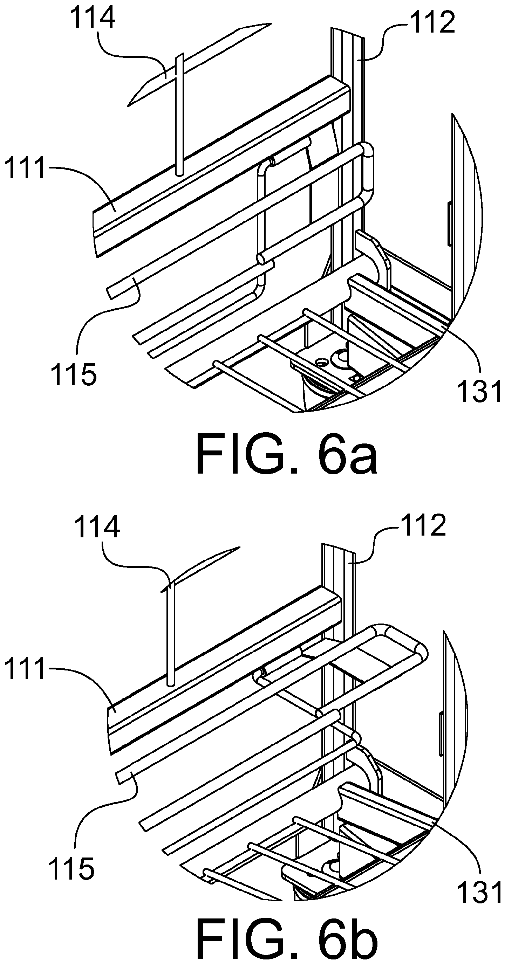

In addition to the rear hinges on the side walls 140 and base 130 the roll container 100 also includes an opening in the rear section 110 to accommodate a base of another such roll container penetrating the rear section 110 in a queue formation. As shown in FIGURES 6a and 6b, the opening preferably includes a hatch 115 which covers the opening in deployed state of the roll container 100. The hatch 115 is preferably top hinged to the rear section 110, particularly to a horizontal frame section 111 of the back part 113a of the rear section 110, for automatic opening and closing. A lateral projection of the hatch 115 engages a vertical frame section 112 of the back part 113a of the rear section 110 to prevent the hatch 115 from turning beyond the rear section 110 to the back side of the roll container 100.

Use of the roll container 100 is simple. To convert the roll container 100 shown in FIGURES 1 to 7 from the deployed state shown in FIGURE 1 to the nesting state shown in FIGURE 4, the user releases the side walls 140 from the deployed state by manipulating the grip 156 of the first locking mechanism 150 by foot. During the manipulation the latch 152 is moved toward the rear of the roll container 100 along the axle 155 (translational dimension T) and rotated about the axle 155 (rotational dimension R) to disengage the claw 157 from the base 130. Once the latch 152 has rotated enough, the spring 154 pushes the grip 156 underneath the retainer 158, where it is held in place. The same release procedure is performed to all locking mechanisms 150. With the locking mechanisms 150 released, the side walls 140 are free to rotate about the hinge connecting the side wall to the rear section 110. As the distal ends of the side walls 140 are retracted from one another, the secondary locking mechanism (cooperating projection 144 and opening 132) is released allowing the base 130 from lifting off the chassis 120 preferably assisted by the biasing element provided to the rear hinge of the base 130. Now, the roll container has assumed the nesting state shown in FIGURE 4. Several roll containers 100 may be queued in the nesting state by inserting the base 130 of a trailing roll container 100 through the opening in the rear section 110 of a leading roll container 100. The hinged hatch 115 will pivot to enable insertion. The rearwardly opening shape of the chassis 120 provides for a reasonable nesting depth. When queued, the plurality of roll containers may be lifted from below and transported with lifting forks of a forklift or other suitable machine assisted transporting means.

Conversion of the roll container 100 from the nesting state shown in FIGURE 5 to the deployed state shown in FIGURE 1 is equally simple. First, the base 130 is lowered from the nesting state on the chassis 120 thus bringing the openings 132 on the appropriate height to receive the projections 144 of the side walls 140. Then, with one foot keeping the base 130 down, the retracted front ends of the side walls 140 are brought towards each other until the projections 144 have entered the openings 132 to keep the base in the deployed state, i.e. horizontal orientation. The side walls 140 are then secured to the deployed position, i.e. longitudinal orientation, by activating the locking mechanisms 150. Activation is achieved simply by releasing the grip 156 from the retainer 158, whereby the biasing element 154 rotates and translates the latch 152 towards the activated angular and axial position in respect to the axle 155 until the claw 157 of the latch 152 has engaged the base 130. Now the side walls 140 and the base 130 are in the deployed position resulting in a prismatic roll container 100 which ready to receive cargo.

The roll container described above and in the drawings may be supplemented with additional devices for improving the transporting ability of the roll container. Should more support be desired, the side walls may be secured to each other with straps, for example, to prevent the side walls from opening upon load from inside the roll container. Additionally or alternatively, the front end of the roll container may be supplemented with a door hinged to either side wall or two doors hinged to opposing side walls.

Generally speaking it may be seen that the proposed solution is very fast to use because the operation of the elements of the roll container requires very few movements.

The A-frame chassis shown in the FIGURES could alternatively be replaced with another chassis type, such as an H-frame chassis or V-frame chassis.

The illustrated embodiment makes use of an articulated latch 152 to provide for a foot-operated first locking mechanism 150. As the latch 152 may be manipulated in two degrees of freedom, namely translation along and rotation about the axle 155, the first locking mechanism 150 may be operated by foot without reaching down, which improves ergonomics. It would alternatively be possible to devise a hand-operated locking mechanism for performing the same locking and releasing function. One can foresee a bayonet shaft penetrating and suspended to the frame of the side wall and being configured to engage a corresponding opening in the base or chassis. To release the side wall from the base or chassis, the shaft would be rotated to release the bayonet connection between the shaft and the base or chassis. The basing element integrated to the sliding fit between the side wall frame and the shaft would urge the shaft away from the base or chassis thus assisting detachment. If the shaft would engage the base and thus not the chassis, the detachment would simultaneously release also the base to lift off the chassis.

**REFERENCE SIGNS LIST**

| **No.** | **Feature** | | |
|---|---|---|---|
| 100 | roll container | 143 | mesh |
| 110 | rear section | 144 | protrusion |
| 111 | horizontal frame section | 150 | first locking mechanism |
| 112 | vertical frame section | 151 | bracket |
| 113a | transversal part | 152 | latch |
| 113b | longitudinal part | 153 | axle support |
| 114 | mesh | 154 | spring |
| 115 | hatch | 155 | axle |
| 120 | chassis | 156 | grip |
| 130 | base | 157 | claw |
| 131 | frame | 158 | retainer |
| 132 | opening | 159 | guide |
| 133 | recess | 160 | castor |
| 140 | side wall | | |
| 141 | horizontal frame section | R | rotational dimension |
| 142 | vertical frame section | T | translational dimension |

## Claims

1. A roll container (100) of a nesting type, comprising:
- a rear section (110),
- two side walls (140) which laterally oppose one another and which are pivotably attached to the rear section (110) such to be pivotable between:
∘ a deployed state, in which the two side walls (140) extend from the rear section (110) parallel to each other, and
∘ a nesting state, in which the two side walls (140) extend from the rear section (110) away from each other,
- a chassis (120) attached to the rear section (110), and
- a base (130) pivotably attached to the rear section (110) such to be pivotable between:
∘ a deployed state, in which the base (130) is supported by the chassis (120), and
∘ a nesting state, in which the base (130) is lifted from the chassis (120),
**characterized by**:
- a first locking mechanism (150) provided to each side wall (140) and configured to releasably secure each side wall (140) to the base (130) or chassis (120) and by
- an additional secondary locking mechanism (144, 130) for locking the base (130) to the deployed state, the secondary locking mechanism comprising:
∘ a first counterpart (144) provided to each side wall (140) and
∘ a second counterpart (132) provided to the base (130), wherein each
first counterpart (144) and second counterpart (132) are configured to:
∘ engage each other in the deployed state of the side walls (140) and the base (130) for preventing the base (130) from lifting off the chassis (120) and to
∘ disengage from each other in the nesting state of the side walls (140) and the base (130) for allowing the base (130) to lift off the chassis (120).

2. The roll container (100) according to claim 1, wherein each first locking mechanism (150) comprises a latch (152) which is configured to selectively engage the base (130) or chassis (120) for securing each side wall (140) to the base (130) or chassis (120), respectively.

3. The roll container (100) according to claim 2, wherein each latch (152) is configured to restrict the pivoting movement of the respective side wall (140) from the deployed state to the nesting state.

4. The roll container (100) according to claim 2 or 3, wherein each latch (152) is journaled to a bracket (151) mounted to the side wall (140).

5. The roll container (100) according to claim 4, wherein each latch (152) is configured to manipulated in respect to the bracket (151) between:
- an activated state, in which the latch (152) engages the base (130) or chassis (120), and
- a released state, in which the latch (152) is released from the base (130) or chassis (120).

6. The roll container (100) according to claim 5, wherein each latch (152) comprises a claw (157) which is configured to engage the base (130) in the activated state of the first locking mechanism (150).

7. The roll container (100) according to any one of the preceding claims 5 or 6, wherein each first locking mechanism (150) comprises a biasing element (154) configured to urge the latch (152) towards the activated state.

8. The roll container (100) according to any one of the preceding claims 2 to 7, wherein each first locking mechanism (150) comprises an axle (155), wherein each latch (152) is connected to the axle (155) such to be translated along the axle (155) and to be rotated about the axle (155).

9. The roll container (100) according to any one of the preceding claims 2 to 8, wherein each first locking mechanism (150) comprises a retainer (158) which is configured to keep the latch (152) in the released state.

10. The roll container (100) according to any one of the preceding claims 2 to 7, wherein each latch (152) is configured to engage the base (130) from underneath the side wall (140).

11. The roll container (100) according to any one of the preceding claims, wherein each first locking mechanism (150) is foot-operated.

12. The roll container (100) according to any one of the preceding claims, wherein each first locking mechanism (150) is configured to be operated from the side of the roll container (100).

13. The roll container (100) according to any one of the preceding claims, wherein the base (130) is horizontally hinged to the rear section (110) and biased towards the nesting state.

14. The roll container (100) according to any one of the preceding claims, wherein each first counterpart (144) is a horizontally extending protrusion and the second counterpart (132) is a cooperatively receptive opening.

15. The roll container (100) according to any one of the preceding claims, wherein the chassis (120) is an A-frame chassis.

16. The roll container (100) according to any one of the preceding claims, wherein the rear section (110) comprises an opening for receiving a base of another roll container in a queue formation.

17. The roll container (100) according to claim 16, wherein the opening comprises a hinged hatch (115).

18. The roll container (100) according to any one of the preceding claims, wherein front castors (160) are attached to the chassis (120).

19. Method of transporting a plurality of roll containers (100) in a nesting configuration, **characterized in that**:
- the plurality of roll containers (100) are according to any of the preceding claims, and **in that**
- said plurality is lifted from below and transported with lifting forks of a forklift.

## Patentansprüche

1. Rollcontainer (100) vom ineinander schiebbaren Typ, umfassend:
- einen hinteren Abschnitt (110),
- zwei Seitenwände (140), die sich seitlich gegenüberliegen und die schwenkbar an dem hinteren Abschnitt (110) angebracht sind, sodass sie schwenkbar sind zwischen:
- einem entfalteten Zustand, in dem sich die zwei Seitenwände (140) vom hinteren Abschnitt (110) aus parallel zueinander erstrecken, und
- einem ineinander schiebbaren Zustand, in dem sich die zwei Seitenwände (140) vom hinteren Abschnitt (110) voneinander weg erstrecken,
- ein Chassis (120), das an dem hinteren Abschnitt (110) angebracht ist, und
- eine Basis (130), die schwenkbar an dem hinteren Abschnitt (110) angebracht ist, sodass sie schwenkbar ist zwischen:
- einem entfalteten Zustand, in dem die Basis (130) durch das Chassis (120) getragen wird, und
- einem ineinander schiebbaren Zustand, in dem die Basis (130) vom Chassis (120) angehoben wird,
**gekennzeichnet durch**:
- einen ersten Verriegelungsmechanismus (150), der an jeder Seitenwand (140) bereitgestellt und konfiguriert ist, um jede Seitenwand (140) lösbar an der Basis (130) oder dem Chassis (120) zu sichern und durch
- einen zusätzlichen sekundären Verriegelungsmechanismus (144, 130) zum Verriegeln der Basis (130) in dem entfaltetem Zustand, wobei der sekundäre Verriegelungsmechanismus Folgendes umfasst:
- ein erstes Gegenstück (144), das an jeder Seitenwand (140) bereitgestellt ist, und
- ein zweites Gegenstück (132), das an der Basis (130) bereitgestellt ist, wobei jedes erste Gegenstück (144) und zweite Gegenstück (132) konfiguriert ist zum:
- Ineinandergreifen der Seitenwände (140) und der Basis (130) in dem entfalteten Zustand, um zu verhindern, dass die Basis (130) vom Chassis (120) abhebt und zum
- Lösen der Seitenwände (140) und der Basis (130) voneinander im ineinander schiebbaren Zustand, um zu erlauben, dass die Basis (130) vom Chassis (120) abhebt.

2. Rollcontainer (100) nach Anspruch 1, wobei jeder erste Verriegelungsmechanismus (150) eine Verriegelung (152) umfasst, die so konfiguriert ist, dass sie selektiv in die Basis (130) oder das Chassis (120) eingreift, um jede Seitenwand (140) an der Basis (130) bzw. dem Chassis (120) zu sichern.

3. Rollcontainer (100) nach Anspruch 2, wobei jede Verriegelung (152) so konfiguriert ist, dass sie die Schwenkbewegung der jeweiligen Seitenwand (140) aus dem entfalteten Zustand in den ineinander schiebbaren Zustand begrenzt.

4. Rollcontainer (100) nach Anspruch 2 oder 3, wobei jede Verriegelung (152) an einer an der Seitenwand (140) montierten Klammer (151) gelagert ist.

5. Rollcontainer (100) nach Anspruch 4, wobei jede Verriegelung (152) so konfiguriert ist, dass sie in Bezug auf die Klammer (151) betätigt werden kann zwischen:
- einem aktivierten Zustand, in dem die Verriegelung (152) die Basis (130) oder das Chassis (120) in Eingriff nimmt, und
- einem freigegebenen Zustand, in dem die Verriegelung (152) von der Basis (130) oder dem Chassis (120) freigegeben ist.

6. Rollcontainer (100) nach Anspruch 5, wobei jede Verriegelung (152) eine Klaue (157) umfasst, die so konfiguriert ist, dass sie im aktivierten Zustand des ersten Verriegelungsmechanismus (150) die Basis (130) in Eingriff nimmt.

7. Rollcontainer (100) nach einem der vorstehenden Ansprüche 5 oder 6, wobei jeder erste Verriegelungsmechanismus (150) ein Vorspannelement (154) umfasst, das so konfiguriert ist, dass es die Verriegelung (152) in den aktivierten Zustand drängt.

8. Rollcontainer (100) nach einem der vorstehenden Ansprüche 2 bis 7, wobei jeder erste Verriegelungsmechanismus (150) eine Achse (155) umfasst, wobei jede Verriegelung (152) mit der Achse (155) so verbunden ist, dass sie entlang der Achse (155) verschoben und um die Achse (155) gedreht werden kann.

9. Rollcontainer (100) nach einem der vorstehenden Ansprüche 2 bis 8, wobei jeder erste Verriegelungsmechanismus (150) einen Halter (158) umfasst, der so konfiguriert ist, dass er die Verriegelung (152) in dem freigegebenen Zustand hält.

10. Rollcontainer (100) nach einem der vorstehenden Ansprüche 2 bis 7, wobei jede Verriegelung (152) so konfiguriert ist, dass sie von der Unterseite der Seitenwand (140) in die Basis (130) eingreift.

11. Rollcontainer (100) nach einem der vorstehenden Ansprüche, wobei jeder erste Verriegelungsmechanismus (150) fußbetrieben ist.

12. Rollcontainer (100) nach einem der vorstehenden Ansprüche, wobei jeder erste Verriegelungsmechanismus (150) so konfiguriert ist, dass er von der Seite des Rollcontainers (100) aus bedient werden kann.

13. Rollcontainer (100) nach einem der vorstehenden Ansprüche, wobei die Basis (130) horizontal an dem hinteren Abschnitt (110) angelenkt und in Richtung auf den ineinander schiebbaren Zustand vorgespannt ist.

14. Rollcontainer (100) nach einem der vorstehenden Ansprüche, wobei jedes erste Gegenstück (144) ein sich horizontal erstreckender Vorsprung ist und das zweite Gegenstück (132) eine zusammenwirkend aufnehmende Öffnung ist.

15. Rollcontainer (100) nach einem der vorstehenden Ansprüche, wobei das Chassis (120) ein A-Rahmen-Chassis ist.

16. Rollcontainer (100) nach einem der vorstehenden Ansprüche, wobei der hintere Abschnitt (110) eine Öffnung zur Aufnahme einer Basis eines anderen Rollcontainers in einer Reihenbildung umfasst.

17. Rollcontainer (100) nach Anspruch 16, wobei die Öffnung eine Scharnierklappe (115) umfasst.

18. Rollcontainer (100) nach einem der vorstehenden Ansprüche, wobei die vorderen Rollen (160) an dem Chassis (120) angebracht sind.

19. Verfahren zum Transportieren einer Vielzahl von Rollcontainern (100) in einer ineinander schiebbaren Konfiguration, **dadurch gekennzeichnet, dass**:
- die Vielzahl von Rollcontainern (100) nach einem der vorstehenden Ansprüche sind, und dadurch, dass
- die Vielzahl von unten angehoben und mit Hebegabeln eines Gabelstaplers transportiert wird.

## Revendications

1. Conteneur roulant (100) d'un type emboîtable, comprenant :
- une section arrière (110),
- deux parois latérales (140) qui sont latéralement opposées l'une à l'autre et qui sont reliées de manière pivotante à la section arrière (110) de manière à pouvoir pivoter entre :
un état déployé, dans lequel les deux parois latérales (140) s'étendent à partir de la section arrière (110) parallèlement l'une à l'autre, et
un état emboîtable, dans lequel les deux parois latérales (140) s'étendent à partir de la section arrière (110) en s'éloignant l'une de l'autre,
- un châssis (120) relié à la section arrière (110), et
- une base (130) reliée de manière pivotante à la section arrière (110) de manière à pouvoir pivoter entre :
un état déployé, dans lequel la base (130) est supportée par le châssis (120), et
un état emboîtable, dans lequel la base (130) est soulevée par rapport au châssis (120),
**caractérisé par** :
- un premier mécanisme de verrouillage (150) disposé sur chaque paroi latérale (140) et configuré pour fixer de manière amovible chaque paroi latérale (140) à la base (130) ou au châssis (120) et par
- un mécanisme de verrouillage secondaire additionnel (144, 130) pour verrouiller la base (130) dans l'état déployé, le mécanisme de verrouillage secondaire comprenant :
une première contrepartie (144) disposée sur chaque paroi latérale (140) et
une seconde contrepartie (132) disposée sur la base (130), dans lequel chaque première contrepartie (144) et chaque seconde contrepartie (132) sont configurées pour :
venir en prise l'une avec l'autre dans l'état déployé des parois latérales (140) et de la base (130) pour empêcher la base (130) de soulever le châssis (120) et pour
se désolidariser l'une de l'autre dans l'état emboîtable des parois latérales (140) et de la base (130) pour permettre à la base (130) de soulever le châssis (120).

2. Conteneur roulant (100) selon la revendication 1, dans lequel chaque premier mécanisme de verrouillage (150) comprend un verrou (152) qui est configuré pour mettre sélectivement en prise la base (130) ou le châssis (120) pour fixer chaque paroi latérale (140) respectivement à la base (130) ou au châssis (120).

3. Conteneur roulant (100) selon la revendication 2, dans lequel chaque verrouu (152) est configuré pour limiter le mouvement de pivotement de la paroi latérale (140) respective de l'état déployé à l'état emboîtable.

4. Conteneur roulant (100) selon la revendication 2 ou 3, dans lequel chaque verrou (152) est tourillonné sur un support (151) monté sur la paroi latérale (140).

5. Conteneur roulant (100) selon la revendication 4, dans lequel chaque verrou (152) est configuré pour être manipulé par rapport au support (151) entre :
- un état activé, dans lequel le verrou (152) met en prise la base (130) ou le châssis (120), et
- un état libéré, dans lequel le verrou (152) est libéré de la base (130) ou du châssis (120).

6. Conteneur roulant (100) selon la revendication 5, dans lequel chaque verrou (152) comprend une pince (157) qui est configurée pour mettre en prise la base (130) dans l'état activé du premier mécanisme de verrouillage (150).

7. Conteneur roulant (100) selon l'une quelconque des revendications précédentes 5 ou 6, dans lequel chaque premier mécanisme de verrouillage (150) comprend un élément de sollicitation (154) configuré pour pousser le verrou (152) vers l'état activé.

8. Conteneur roulant (100) selon l'une quelconque des revendications précédentes 2 à 7, dans lequel chaque premier mécanisme de verrouillage (150) comprend un axe (155), dans lequel chaque verrou (152) est relié à l'axe (155) de manière à être déplacé par translation le long de l'axe (155) et à être déplacé par rotation autour de l'axe (155).

9. Conteneur roulant (100) selon l'une quelconque des revendications précédentes 2 à 8, dans lequel chaque premier mécanisme de verrouillage (150) comprend un élément de retenue (158) qui est configuré pour maintenir le verrou (152) dans l'état libéré.

10. Conteneur roulant (100) selon l'une quelconque des revendications précédentes 2 à 7, dans lequel chaque verrou (152) est configuré pour mettre en prise la base (130) à partir du dessous de la paroi latérale (140).

11. Conteneur roulant (100) selon l'une quelconque des revendications précédentes, dans lequel chaque premier mécanisme de verrouillage (150) est actionné au pied.

12. Conteneur roulant (100) selon l'une quelconque des revendications précédentes, dans lequel chaque premier mécanisme de verrouillage (150) est configuré pour être actionné à partir du côté du conteneur roulant (100).

13. Conteneur roulant (100) selon l'une quelconque des revendications précédentes, dans lequel la base (130) est articulé horizontalement à la section arrière (110) et sollicité vers l'état emboîtable.

14. Conteneur roulant (100) selon l'une quelconque des revendications précédentes, dans lequel chaque première contrepartie (144) est une saillie s'étendant horizontalement et la seconde contrepartie (132) est une ouverture à réception coopérative.

15. Conteneur roulant (100) selon l'une quelconque des revendications précédentes, dans lequel le châssis (120) est un châssis cadre en A.

16. Conteneur roulant (100) selon l'une quelconque des revendications précédentes, dans lequel la section arrière (110) comprend une ouverture pour recevoir une base d'un autre conteneur roulant dans une formation en file.

17. Conteneur roulant (100) selon la revendication 16, dans lequel l'ouverture comprend une trappe à charnière (115).

18. Conteneur roulant (100) selon l'une quelconque des revendications précédentes, dans lequel des roulettes avant (160) sont reliées au châssis (120).

19. Procédé de transport d'une pluralité de conteneurs roulants (100) dans une configuration emboîtable, **caractérisé en ce que** :
- la pluralité de conteneurs roulants (100) sont selon l'une quelconque des revendications précédentes, et **en ce que**
- ladite pluralité est soulevée par dessous et transportée avec des fourches de levage d'un chariot élévateur.
